# EUROPEAN PATENT APPLICATION

(11) **EP 1 143 349 A1**
(43) Date of publication of application: **10.10.2001**
(21) Application number: 00107594.4
(22) Date of filing: 07.04.2000
(51) Int. Cl.: G06F 17/30

(54) **Method and apparatus for generating index data for search engines**

(71) Applicant: IconParc GmbH, 80333 München (DE)
(72) Inventor: Brückner, Roland, 81371 München (DE)
(74) Representative: Betten & Resch

(57) **Abstract**

The invention relates to a method for generating index data to be provided to a search engine to be used for searching the internet or a non-public network, said index data comprising one or more search indices, said method comprising the steps of: generating at least one search index on a computer based on data stored on or accessible by said computer, said computer being located remotely from said search engine, said index being generated in accordance with one or more settings or selectable options defining which data stored on or accessible by said computer is to be used for generating said at least one index.

## Description

### Field of the invention

The present invention relates to a method and an apparatus for generating a search(able) index for search engines used on the internet or on non-public networks.

### Description of the related art

From the internet user's view all types of search engines are very similar in appearance: a search form must be filled in before submitting the request; a list of hits is returned within a couple of seconds; each hit links to the original website's (static or dynamically built) page. However, there may be various search forms of different complexity. Usually, a quick search option is available as well as some kind of expert search. The former typically consists of a search form with only one field which can be filled with keywords. The latter may vary depending on the indexing capabilities of the specific search engine. However, in most cases the expert search offers advanced features such as boolean operations (AND, OR, NOT) performed with different search keywords. A search index usually consists of a number of entries, each entry including a search term and a corresponding hit location or a pointer (=URL: uniform resource locator) thereto.

An Internet website that is to be found through a search engine must either be registered with the search engine or can be detected automatically in case the search engine crawls the web on its own. In any case it has to be incorporated into the search index of the search engine. However, since the number of pages on the World Wide Web (hereinafter referred to as WWW) continues to grow dramatically most search engines require explicit registration of any Uniform Resource Locator (hereinafter referred to as URL) which is a unique identifier or pointer to any resource (e.g. static or dynamically built web pages) that can be found on the Internet, the contents of which is to be transmitted to and indexed by the search engine. Once the page contents has been stored in the searchable index the page can be found through the search engine's public web frontend. Thus, it is in the search engine's responsibility to decide which contents will be contained in the searchable index. The contents of the respective search index depend on the indexing method implemented on the search engine.

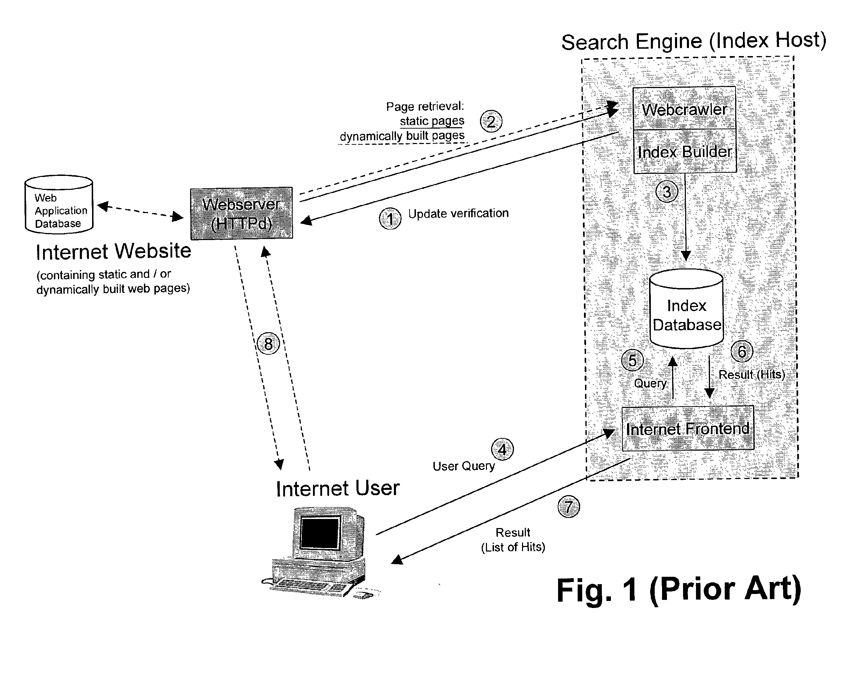

In the following the operation of a conventional method for generating index data will be described in more detail in conjunction with Fig. 1.

Assuming a specific URL stored on a specific website is known to a search engine's crawler this URL will be scanned periodically in order to check whether its contents has changed since the previous visit (1). In case the crawler module detects that this page has been updated it retrieves the page and transmits it to the search engine (2) using a standard web protocol (HTTP). HTTP is the so-called Hypertext Transfer Protocol, a common language implemented by both webbrowsers (=clients) and webservers used to exchange data across TCP/IP-based networks. There, all formatting information is removed so that only pure unstructured text data remains. After that, an index is generated from the text contents of this web document (3). This piece of index data then joins the already existing index database made available through the search engine. From that moment on, the just indexed URL can be retrieved by internet users who are performing queries accessing this particular search engine's internet frontend with a web browser (4). The query is executed on the search engine (5) and results in a list of hits (6) which is transmitted back to the browser where the query originated from(7). Now the internet user may find the desired pieces of information on one of the web pages the URL of which is contained in the search results (8).

Dynamically built web pages (generated for instance by an online store) can only be retrieved (and thus indexed) in some special scenarios. However, in many cases dynamic content remains invisible to common search engines, which is mainly due to the following reasons:

Firstly access to dynamically generated webpages often requires some sort of session identification which is usually part of the URL. Storing that kind of URL does not make sense because anyone retrieving and attempting to access the original page later on is likely to encounter some sort of "invalid session (time out)" message.

Secondly search engines can only detect web pages that are linked to from other web pages already known to the search engine; but many pages with dynamically built content (e.g. large online store catalogs) are not accessible through any standard page of a website at all. Instead, a search form on that website (filled in with user-defined search parameters) has to be submitted in order to obtain a list of relevant URLs (linking to those pages with dynamically built content).

Thirdly a fast growing number of web pages is updated more and more frequently. It is obvious that eCommerce applications require search engines that check back more often than once every 2 or 3 weeks to detect and retrieve updated pages.

This means that accessing dynamically generated webpages through a search engine for building their search index is only possible to a very limited extent and therefore does not lead to good search results when using said search engine for finding dynamically generated webpages.

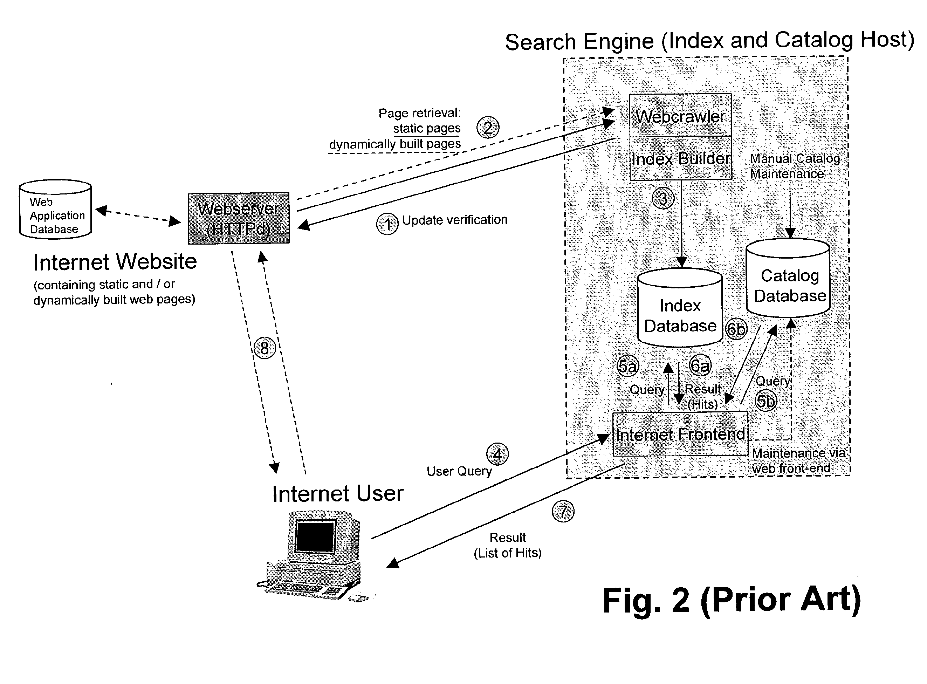

Given a specific host computer, there is another conventional method of generating index data based on which the search engine located on this host can conduct search operations. This method will now be explained in conjunction with Fig. 2.

Several search engines are capable of maintaining and visualizing the index database's content in a hierarchical (tree-like) catalog structure. Thus, a complementary way of discovering information is available: instead of keying in search terms, a user may -navigate step-by-step through the catalog's (sub)categories (such as sports, finance, technology, news, ....) in order to find relevant pieces of information. Such a catalog's maintenance requires manual effort by the search engine's host even if there is an internet frontend permitting users to add catalog records online (today, no fully automated solution is available on the market). It is crucial to understand that these search engine catalogs only offer very limited functionality in terms of search parameters and datamodel flexibility: at the bottom line it's not a fully-fledged structured datamodel for example for cars or holiday trips but simply a hierarchical navigation model that lets users work their way down the navigation tree starting at more general categories (e.g. "sports") and ending up at more and more specialized categories (e.g. "equipment for river rafting" or "sports events in Atlanta").

Another approach to store searchable data in a structured catalog on a search engine comprises the capability to handle structured data which is extracted from webpages containing for example data in a tabular manner (e.g. a price list for products offered on a specific webpage). In this scenario pieces of structured data will be transferred from the webserver to the search engine in two different ways:

The structured data contained in webpages which are meant to be indexed can be copied manually by the staff that runs the search engine. However, this is a time-consuming and error-prone way of maintaining the search engine's database. Thus, it is a common approach to write some sort of "scanner program" that loads and analyzes webpages containing structured data. This must be done on the side of the search engine. That way, the process of retrieving and updating structured data can be automated on a **per-webpage** basis only which is the main catch here: since there are millions of webpages potentially and in practice containing all different formats and models of structured data there is no way of covering even a small share of them as long as it is necessary to write one scanner program for each webpage the structured contents of which is to be analyzed and stored on the search engine.

All of the conventional approaches, the indexing concept as well as the catalog concepts as known in the prior art suffer from substantial disadvantages.

### Summary of the invention

It is an object of the present invention to provide an improved method and apparatus for generating searchable data to be stored on and made available through search engines.

According to an aspect of the present invention, at least one search index to be used by a search engine when searching the internet is generated on a computer located remotely from the host on which the search engine is located. This removes the responsibility of generating search(able) index data from the host or operator of the search engine. Instead, this task is performed on a computer where the data which later is to be found through the search engine is located.

With such a configuration the host, owner or operator of the computer on which the search index data is generated may directly influence the contents of the search index to be maintained by the search engine and thereby he can increase the likelihood that the data he wishes to be found by network users when conducting search operations actually will show up as a query result. A software module hereinafter called an indexer module running on the computer which is hosting the data to be indexed may generate the search index data and this data may then be transferred to the search engine host where it is incorporated into or joins the search(able) index already present there.

Furthermore such a configuration can prevent inconsistent query results such as that e.g. a link might be broken (i.e. invalid); a link might lead to a web page offering information on other topics than it did when it was scanned by the search engine, etc., since using indexing remote from the search engine the control of index and catalog data is transferred to the information source (= host of an internet website); in other words: the search engine does no longer decide what contents are meant to be gathered.

Moreover, such a configuration enables automated support not only for static web pages but also for all kinds of dynamically generated web pages since the index generation is carried out on the computer where the dynamic web application is running and not on the search engine host.

The computer running the indexer module and thus building the index data may be a webserver or any content server being connected to the Internet or to a non-public network; it may also be a normal computer on which a web application is running or on which any internet content can be stored. For example a user of the index generating computer may have his own website being located on another computer such as the server of his internet provider where his webspace is located, but for generating the index he may just transfer his website or web application down to his own computer and may thereon carry out the generation of the index. For that purpose a crawler may be provided in the indexer module for retrieving the internet based content such as a website from the remote server to then build the index data.

The indexer module may be installed on a webserver as add-on. The thereby built index is then transferred ("pushed") from the originating webserver to the search engine where it joins the already existing index database.

Preferably the indexer module also controls - possibly in accordance with user settings - the update interval/frequeny of the index generation and its transmission to the search engine host. This can prevent the generation of stale query results: outdated information is avoided by handing over control of update intervals to the information source (= host of an internet website); in other words: the search engine also loses control of the update intervals enabling the user to make sure that the most recent information is uploaded and then contained in the search engine's search(able) index.

Preferably the search engine generates billing data and optionally sends it back to the indexer module. This makes it possible to charge the user for enabling him to transfer his self-generated search index data to the search engine, The user may also be charged for the possiblity to controlwhat kind of data the search engine is maintaining. The billing may depend e.g. on update interval, update volume, type of index / catalog where the index data is to be incorporated, etc.

Preferably not only a single index but also or alternatively catalog data is generated by the indexer module. Catalog data comprises a plurality of indices which are ordered or grouped according to some schema. This means e.g. that one or more categories are provided, each category comprising a plurality of indices, and each index corresponding to a search field falling into said category. By such a catalog structure it becomes possible not only to navigate thhrough a catalog, but rather to search a catalog by keying in search terms for the individual search fields corresponding to said indices. Thereby it offers automated support not only for unstructured index data but also for structured catalog data (not limited to one specific datamodel).

Preferably schema data informing the indexer module about how the catalog data is to be generated is sent from the search engine host to the computer on which the index builder is running. This makes it possible to generate catalog data for different search engines which may require different internal indexing structures based on the information which the index builder receives from the search engine host.

Preferably the indexer module is capable of building index and catalog data for various kinds of datasources such as static web pages, relational databases which then enables support for dynamically generated web pages, and documents of other commonly used formats (WinWord, Excel, etcetera). It preferably also supports common methods such as ODBC and JDBC to access databases.

The indexer module preferably enables the user to choose some setting options such as which fields of a database are to be used when generating the index or catalog data, how often the index is to be updated, a regional classification of the index or catalog data (for each piece of information) to be transmitted to the search engine host, etcetera. This allows for a very flexible generation of the index or catalog data according to the user's needs. Moreover, with a thus generated index a much better refined search can be performed since it offers a lot more filtering options for search operations. This consequently leads to improved results, which usually means less hits and more hits of high relevance.

A web-based user interface and/or a tag-based programming language may be used to allow for easy customization of such settings on the indexer module. The settings may therefore be also represented by some piece or pieces a of computer program, which may be in the form of some programming language.

Instead of the settings being chosen by the user the options may also be set according to data received by the indexer module from the search engine.

Preferably structured catalog data containing a plurality of indices is supported in an automated manner.

Preferably there is provided fully automated handling of index and catalog data according to the indexer module's configuration set individually by each website host (this implies generating initial index and catalog data, updating index and catalog data as well as communicating with the push indexing search engine in order to transmit index and catalog data and in turn to receive billing data and / or database schemas).

Other objects and features will be clarified from the following description with reference to attached drawings.

### Brief description of the drawings

- Fig. 1: shows a block diagram of the search engine according to the prior art.
- Fig. 2: shows a block diagram of another search engine according to the prior art.
- Fig. 3: shows generation and transmission of index data according to an embodiment of the present invention.
- Fig. 4: shows generation and transmission of index and/or catalog data according to another embodiment of the present invention.

### Detailed description of the preferred embodiments

Before turning to the detailed description of the preferred embodiments in the following summary of definitions there is given a brief outline of the terminology used in connection with the detailed description.

### Summary of Definitions:

**Index data** can be derived from one or more of the following types of data

**Unstructured data =** textual information; e.g. used in conjunction with so-called fulltext searches; when being indexed, unstructured data may be extended to incorporate additional information such as document (webpage) owner, location or timezone;

**Single index** = index comprising unstructured data; the index may be extended to incorporate additional information such as document (webpage) owner, location or timezone;

**Structured data** = contents available in a tabular, relational or object-oriented manner; tabular data can be found for example within static or dynamically generated webpages; relational data is typically stored in and retrieved from relational database management systems (RDBMS); object-oriented data is typically stored in and retrieved from object-relational or object-oriented database management systems;

**Plurality of indices** = collection of indices;

**Group of indices** = plurality of indices belonging to the same context, i.e. describing a specific model of structured data (e.g. the set of attributes specifying a specific topic such as "Journeys" or "Sports Events" or any other topic)

In the context of this document index data is generated for use by search engines on the internet or on non-public networks. Thus, index data is a special representation of structured and / or unstructured contents. The index will be used to differentiate between, search for, and locate information resources which are made available through the internet or on a non-public network. Today, each individual resource of information (e.g. a specific webpage) can be addressed by its unique URL (= uniform resource locator).

**Web resource** = any webpage or document or piece of data accessible through the internet or on a non-public network by means of an URL;

**Search index** = index data and / or searchable index database maintained by and accessible through a search engine on the internet or on a non-public network; the index database may consist of multiple search indices supporting various datamodels. Each datamodel maps to a specific category of searchable content (e.g. "unstructured text", "IT components", "Books", "Movies", "Tickets");

**Searchable index** = synonym for search index;

**Index database** = database storing information which is originally transmitted to the search engine using index data; the database may support unstructured data and / or structured (i.e. tabular, relational, object-oriented) data;

**Catalog database** = particular characteristic of an index database supporting only structured (i.e. tabular, relational, object-oriented) data in the context of a search engine based on push indexing;

**Content server** = server system making available various kinds of content resources (e.g. MPEG movies, HTML webpages, Acrobat PDF Documents) on the internet or on a non-public network;

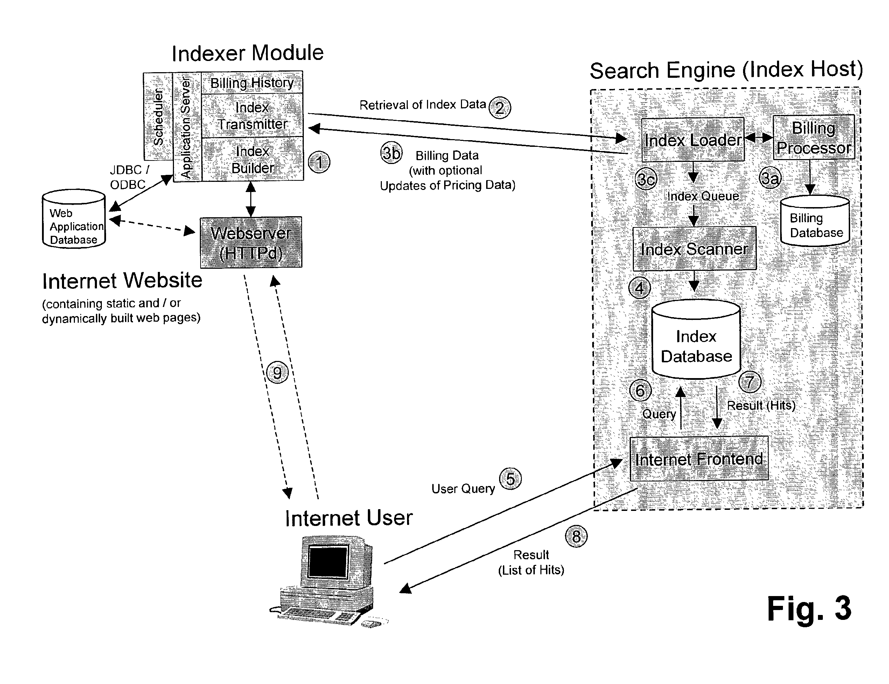

A first embodiment of the present invention will be described with reference to Fig. 3.

As soon as the indexer module is installed as a webserver extension it can be used to generate index data for all content that's made available through the webserver. The indexer module reads the webserver configuration and thus determines which virtual paths and virtual servers are available. Index data is then built (1) according to the administrator's settings (selection of static pages and formats, index update schedule, regional classification, etc.). Indexing the contents of dynamically built web pages potentially containing structured data may involve writing program code in a simple script language (or any other suitable programming language supported by the indexer module) to some extent: since structured data typically resides in relational databases the indexer module is capable of connecting to ODBC and JDBC datasources. In conjunction with an easy to learn tag-based programming language any kind of database content may be retrieved and added to the originating index.

Schematically this can be done by defining the following in a script language:
a) Define data fields (and/or data sources) to be accessed
b) retrieve data from those data fields
c) convert format of retrieved data to match with format required by the index of the search engine
d) define further classification of index data
e) define update interval

The individual steps are now explained exemplarily in connection with the generation of index data relating to literature. Step a) then defines for example that the data fields author and title and price are to be accessed and indexed. In step b) the data is retrieved. Step c) may define the necessary calculation formula to convert the price from the currency used in the accessed database to the currency used in the index of the search engine. Step d) may additionally be defined that the so generated index data has the regional classification "Germany", which means that a search in the search engine using the regional classification "France" will not lead to the so generated index data being interpreted as a hit. Finally step e) defines the update interval in which the index is to be updated.

With such an example a bookstore may according to its desire generate index data by accessing its own database and then sending the so generated index data to a search engine host where it is incorporated into the search index of the search engine.

If step c) and d) are omitted, then the so generated index data may be used in the most general (unstructured) possible index in which each entry only consists of a search term and the corresponding URL. The retrieved data just is indexed and then sent to the search engine host. This is the most simple case and the index of the search engine in this case resembles the index of the prior art, however, it has not been generated by the search engine but remotely threrefrom and according to the preferences of the user. Also it is updated according to the user's preferences, and therefore its content significantly differs from the index of a conventional search engine.

For using step c) and d) in a meaningful manner the search engine index should actually have some structure where the additional regional classification and the price, possibly also the author and the title are povided as separate indices being searchable by keying in corresponding search terms.

The index transmitter is another part of the indexer module; it is used to connect and transmit index data to the destination search engine (2). The index transmitter has its complement on the side of the search engine: the index loader receives index data and performs a couple of further tasks: Together with the billing processor and the billing database it creates and saves the billing data that's incurred with index handling and storage (3a). The billing processor may e.g. calculate the charging of the user based on the volume of the received index data, its update interval, based on the special rate applicable for a specific user, or according to any other billing scheme. As a receipt, a set of billing data is returned to the index transmitter which initiated the transfer (3b). Having disconnected from the indexer module the new index data is placed in a queue where it waits until it can be processed by the index scanner (3c). The scanner permanently reads index data from the index queue. All index data is processed and stored in the index database (4).

From that moment on, the just indexed set of URLs can be retrieved by internet users who are performing queries accessing this particular search engine's internet frontend with a web browser (5). The query is executed on the search engine (6) and results in a list of hits (7) which is transmitted back to the browser where the query originated from (8). Now the internet user is likely to find the desired pieces of information on one of the web pages the URLs of which are contained in the search results (9). Moreover, the user who hase uploaded the index generated according to his preferences can be sure that the data he wishes to be searchable actually is contained in the search(able) index of the search engine.

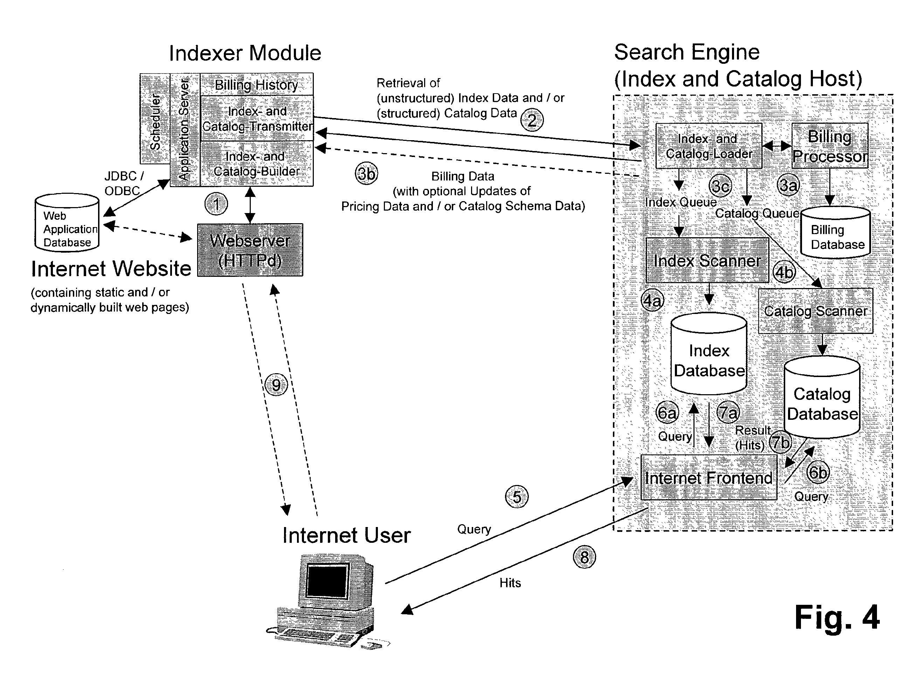

A further embodiment of the present invention will now be described in conjunction with Fig.4.

Based on the scenario described above one step further it seems to be a logical variation not only to handle unstructured index data but also structured catalog data. It should be noticed that the term catalog data as used in the following has a meaning substantially different from catalogs described in conjunction with the prior art.

When referring to catalog data in the following, we mean a particular type of index data, namely index data which actually comprises a plurality of separate indices. Each of those indices contains a list of searchable terms, and the searchable terms in a single one of those indices all belong to the same category, such as e.g. price, place, time, etc.

A plurality of indices which are somehow contextually or semantically linked together form a group of indices. E.g. destination country, duration of stay, departure date, return date, travel price, may be categories of indices which together form the group "travelling".

Another example could be the group "cars", which may contain the index categories "manufacturer", "manufacturing year", "engine power" and "price".

Other groups of indices can be imagined straightforwardly. The several groups of indices may then be ordered in the search engine to form what we call a "catalog".

The groups in such a catalog may be hierarchically ordered, e.g. a group "science" may contain the sub-groups "natural sciences" and "arts", the group natural sciences may contain the sub-groups physics, chemistry, etc., while the group arts may have the sub-groups philosophy, literature, etc.

Each group or sub-group then may contain a plurality of indices of corresponding categories which may be used to conduct a search in the respective group or sub-group of the catalog.

As a consequence of the foregoing, all modules that in the previous embodiment took care of index data must be enhanced to become aware of (structured) catalog data. Thus, the index builder is turned into an index- and/or catalog-builder, the index transmitter becomes an index- and/or catalog-transmitter, and so on. Typically, structured data will be taken from databases storing information created and maintained by dynamic web applications such as web databases. Structured data here means semantically structured, which means that the data is not used to build a single full text index but is - according to its semantic meaning - to be incorporated into its corresponding one of a plurality of indices provided in the catalog database of said search engine. Again, the already mentioned tag-based scripting language (or any other suitable programming language) that ships with the indexer modules is made use of to extract information meant to be transmitted as catalog data. The general process described in connection with the previous embodiment remains the same while there are enhancements that mainly affect data formats used when building, transmitting and processing index and catalog data. This is because it is very unlikely that the data retrieved from web databases matches in its format with the requirements of the corresponding indices used in the catalog index of the search engine. Therefore in many cases a format conversion will have to be performed like it was described in connection with the currncy conversion of the previous embodiment.

After receiving a combined set of index and catalog data the search engine's loader module again creates and stores a set of billing data first (3a). Again, billing data is returned to the indexer module which originated the transfer (3b). Then the loader module separates the index data from the catalog data. While the former is placed in the index queue the latter is added to the catalog queue (3c). Due to the different nature of unstructured index data and structured catalog data two separate databases are used. Accordingly, an additional catalog scanner (4b) is required since the index scanner (4a) only handles index data.

From that moment on, both the index data and the catalog data can be retrieved by internet users who are performing queries accessing this particular search engine's internet frontend with a web browser (5). Queries may be run against only the index database, only the catalog database or both databases simultaneously (6a, 6b). Result sets returned by the databases (7a, 7b) are merged together if necessary. The combined set of results is then transmitted back to the web browser where the query originated from (8). Now the internet user is likely to find the desired pieces of information on one of the web pages the URLs of which are contained in the search results (9).

Of course it is also possible to generate and transmit catalog data only without generating and transmitting index data.

In the foregoing embodiments a technology to generate index data remotely from a search engine has been described. This results in several significant advantages over the prior art approach.

E. g. there is provided an enabling technology for realizing not only a technologically new and inventive approach but also for realizing a new business model: since remote indexing decisively increases the level of quality offered by search engines usage fees can be easily justified; any website host running an indexer module will e.g. be billed according to the number of URLs and / or catalog entries selected for storage on the search engine and their respective update intervals.

Search engines based on the remote indexing approach are fully compliant to eBusiness applications and information brokerage applications (as opposed to common search engines) since they can easily handle dynamically generated webpages potentially and in practice containing structured and/or unstructured content.

Furthermore remote indexing is much more bandwidth-efficient than the method employed by common search engines because it does not require transmission of complete web pages between a website and the search engine. Typically, index data shrinks to about 40% of the original page's size. To further reduce the amount of time (and bandwidth) needed to transfer updates index and catalog data may be packed (compressed) prior to transmission.

Although not expressly mentioned before a catalog host may also be implemented on its own (that is, without the index-handling part dealing with unstructured index data). Today, none of the large, well-known Internet search engines processes structured catalog data alone but this may become a promising approach in the future.

It can also be imagined that a hybrid configuration of the conventional techology and the technology of the present invention is employed. E.g. a conventionally generated search index may be freely accessed and searched by a user and a search index generated according to the present invention can only be accessed if the user has accepted to be charged for it.

Communication between indexer modules and the remote indexing search engine may be implemented using a TCP/IP-based protocol. Even though it is imaginable to make use of standard protocols such as HTTP or FTP defining a variation thereof or even introducing a completely new protocol may turn out to be reasonable for applying the present invention.

The data format used to describe index and catalog data may be in the form of XML or any of its derivatives.

Apart from regional classification of index or catalog data any other conceivable classification is possible as well.

It is readily apparent to the expert from the foregoing that hereinbefore there have been mentioned embodiments which are exemplary only and which can be easily modified or supplemented without departing from the spirit and scope of the present invention. E.g. if necessary, index and/or catalog data might be encrypted prior to transmission. Furthermore it should be clear that the elements of the embodiments described above may be realized by means of software, or by means of hardware, or by a combination of both of them.

## Claims

1. A method for generating index data to be provided to a search engine to be used for searching the internet or a non-public network, said index data comprising one or more search indices, said method comprising the steps of:
generating at least one search index on a computer based on data stored on or accessible by said computer, said computer being located remotely from said search engine, said index being generated in accordance with one or more settings or selectable options defining which data stored on or accessible by said computer is to be used for generating said at least one index.

2. A method according to claim 1, further comprising:
transmitting said index from said remote computer to said search engine to enable the search engine to incorporate the thus transmitted index into one or more of its search indices used for searching the internet or a non-public network.

3. A method according to claim 1 or 2, wherein said at least one index is generated, updated and / or transmitted automatically in a configurable or programmable manner thereby not requiring human interaction each time index data is to be generated, updated and / or transmitted.

4. A method according to claims 1, 2 or 3, wherein said data stored on or accessible by said computer comprises one or more of the following:
static and / or dynamically generated web resources installed or running on said computer;
web resources consisting of structured and / or unstructured data;one or more web applications running on said computer;
one or more web application databases running on or accessible by said computer.

5. A method according to one of claims 1 to 4, wherein
said computer is a webserver or a content server on the internet or on a non-public network, located remotely from said search engine.

6. A method according to one of claims 1 to 5, further comprising:
generating billing data in accordance with the transmission of said index data to said search engine and/or the incorporation of said index data into one or more search indices maintained by said search engine.

7. A method according to one of claims 1 to 6, wherein
said settings may be defined by the operator of said computer located remotely from said search engine, and/or
said settings are in accordance with the requirements given through said search engine.

8. A method according to one of claims 1 to 7, further comprising:
repeatedly generating and transmitting said at least one index in accordance with an update schedule set on said computer to provide said search engine with repeatedly updated search indices.

9. A method according to one of claims 1 to 8, further comprising:
generating a plurality of search indices on said webserver, each of said search indices containing data belonging to a certain category or type.

10. The method according to claim 9, wherein
said plurality of search indices is generated based on settings defining the format and/or the datamodel and/or the categories of said individual indices and/or the data sources to be accessed for generating said search indices.

11. The method according to claim 9 or 10, wherein
said settings comprise one or more standard format and/or datamodel definitions required by said search engine to enable the search engine to incorporate the indices generated on said webserver into the search engine's existing search indices.

12. The method according to one of claims 9 to 11, wherein
a plurality of indices belonging to the same context form a group of indices, several groups of indices being generated on said webserver, each including a plurality of indices belonging to the same context, respectively, said groups of indices being generated such that they correspond to groups of indices being comprised by a catalog database of said search engine.

13. The method according to one of claims 9 to 12, further comprising:
receiving said at least one index generated on said webserver by said search engine;
scanning one or more indices received by said search engine and incorporating them into one or more corresponding indices in an index database or a catalog database of said search engine used by said search engine for searching the internet.

14. The method according to one of claims 9 to 13, wherein said index database on said search engine comprises:
an index database comprising a single searchable index, and/or:
a catalog database comprising one or more groups of indices.

15. The method according to claim 14, wherein
said groups of indices are searchable by the user through a frontend offering him the search of the groups of indices in an ordered form to provide a catalog search option in which different contexts can be searched by using search criteria corresponding to the individual indices respectively belonging to said context.

16. A method for searching the internet using a search engine, said method comprising:
searching the internet based on at least one search index generated according to the method of one of the preceeding claims and transmitted from a remote computer to said search engine.

17. A method according to claim 16, further comprising one or more of the followingbilling a search engine user for carrying out a said search method;
billing the host and/or operator and/or owner of said computer said contents of which is indexed and in turn transmitted to said search engine for making said index data available to network users through said search engine.

18. An apparatus for generating index data to be provided to a search engine to be used for searching the internet or a non-public network using one or more search indices, said apparatus comprising:
means for generating at least one search index on a computer based on data stored on or accessible by said computer, said computer being located remotely from said search engine, said index being generated in accordance with one or more settings or selectable options defining which data stored on or accessible by said computer is to be used for generating said at least one search index.

19. An apparatus according to claim 18, further comprising:
means for carrying out a method according to any one of claims 2 to 17.

20. A computer program comprising computer executable instructions for causing a computer to carry out a method according to any of claims 1 to 17.

21. A data structure comprising:
at least one search index which can be used by a search engine and which has been generated by a method according to one of claims 1 to 17.
